**Europäisches Patentamt**

**European Patent Office**

**Office européen des brevets**

(19)

(11) Veröffentlichungsnummer: **0 209 197**
**A2**

(12) # EUROPÄISCHE PATENTANMELDUNG

(21) Anmeldenummer: 86201233.3

(22) Anmeldetag: 15.07.86

(51) Int. Cl.⁴: **G06K 11/06**

(30) Priorität: 17.07.85 DE 3525499

(43) Veröffentlichungstag der Anmeldung:
21.01.87 Patentblatt 87/04

(84) Benannte Vertragsstaaten:
DE FR GB IT

(71) Anmelder: **Philips Patentverwaltung GmbH
Billstrasse 80
D-2000 Hamburg 28(DE)**
Anmelder: **N.V. Philips' Gloeilampenfabrieken
Groenewoudseweg 1
NL-5621 BA Eindhoven(NL)**

(72) Erfinder: **Peemöller, Horst
Bengelsdorfstrasse 2
D-2000 Hamburg 71(DE)**
Erfinder: **Svensson, Heino
Paul-Sorge-Strasse 212b
D-2000 Hamburg 61(DE)**

(74) Vertreter: **Kupfermann, Fritz-Joachim et al
Philips Patentverwaltung GmbH Billstrasse
80 Postfach 10 51 49
D-2000 Hamburg 28(DE)**

(54) **Vorrichtung zur Erzeugung von X-Y-Koordinatenadressen für einen hochauflösenden Bildschirm.**

(57) Die Erfindung bezieht sich auf eine mechanische Vorrichtung zur Erzeugung von x-y-Koordinatenadressen für einen hochauflösenden Bildschirm mit einer druckempfindliche Kraftmeßfühler (13 a, 13b, 15a, 15b) beeinflussenden Bedienungsplatte (3). Die Koordinaten von Punkten auf der Plattenoberfläche - (23) werden beim Drücken auf diese Punkte von den Kraftmeßfühlern (13a, 13b, 15a, 15b) in elektrische Signale umgewandelt, die einer x-y-Koordinatenadresse entsprechen, die genau mit dem geografischen Ort des Druckpunktes des hochauflösenden Bildschirmes identisch ist. Die Bedienungsplatte (3) weist dabei erste, etwa parallel gegenüberliegende Seitenränder (17a, 17b) und zweite, diesen gegenüber um etwa 90° versetzt, ebenfalls parallel gegenüberliegende Seitenränder (19a, 19b) auf. Hinter der Bedienungsplatte (3) sind in parallelen Ebenen zu ihr angeordnete Hilfsplatten (103, 203) vorgesehen. Die Platten (3, 103, 203) sind untereinander mittels federnder Randabstützungen verbunden, wobei die federnden Randabstützungen (9a, 9b, 11a, 11b) von Platte zu Platte längs in gleicher Richtung zwischen parallel zu-und übereinander verlaufender Seitenränder (17a, 17b, 117a, 117b, 217a, 217b) erfolgt und von Platte zu Platte immer abwechselnd um jeweils ca. 90° versetzt ist von den ersten zu den zweiten Seitenrändern und umgekehrt. Die Kraftmeßfühler (13a, 13b bzw. 15a, 15b) sind mittig zwischen den federnden Randabstützungen (9a, 9b bzw. 11a, 11b) im Bereich der Plattenrändern angeordnet.

# Fig.1

## Vorrichtung zur Erzeugung von x-y-Koordinatenadressen für einen hochauflösenden Bildschirm

Die Erfindung bezieht sich auf eine mechanische Vorrichtung zur Erzeugung von x-y-Koordinatenadressen für einen hochauflösenden Bildschirm mit einer druckempfindlichen, Kraftmeßfühler beeinflussenden transparenten Bedienungsplatte, wobei durch Drücken auf die Bedienungsplattenoberfläche im Druckpunkt durch die Kraftmeßfühler elektrische Signale erzeugt werden, die in einer nachfolgenden Elektronik in digitale x-y-Koordinatenadressen umgewandelt werden, die genau dem geografischen Ort des Druckpunktes auf dem Bildschirm entsprechen, wobei die Bedienungsplatte erste, etwa parallel gegenüberliegende Seitenränder und zweite diesen gegenüber, etwa um 90° versetzte, ebenfalls etwa parallel gegenüberliegende Seitenränder aufweist. Die mechanische Vorrichtung wird in den Frontrahmen eines hochauflösenden Monitors vor der Bildröhre installiert und als Touchpanel benutzt und wobei die Bedienungsplatte in federnden Randabstützungen angeordnet ist.

Aus der DE-OS 35 20 701 ist eine derartige Vorrichtung bekannt. Die Kraftmeßfühler sind bei der rechteckig ausgebildeten Bedienungsplatte im Bereich der Plattenecken vorgesehen. Es hat sich gezeigt, daß die Koordinaten eines auf der Plattenoberfläche druckbelasteten Punktes in diesem Fall nur theoretisch Punkt-Koordinaten entsprechenden elektrischen Signalen führen. In der Praxis zeigt es sich, daß bei einer Anordnung mit den Kraftmeßfühlern in den Plattenecken die gewünschten Signale nur erhalten werden bei einem Drücken auf die Bedienungsplatte im Bereich der Plattenmitte.

Es ist Aufgabe der Erfindung, eine Vorrichtung zur Erzeugung von x-y-Koordinatenadressen für einen hochauflösenden Bildschirm zu schaffen, bei der von jedem Punkt der Bedienungsplatte aus auf die Kraftmeßfühler unterhalb der Bedienungsplatte derart verteilt Kräfte ausgeübt werden, daß eine x-y-Koordinatenadresse entsteht.

Die gestellte Aufgabe ist erfindungsgemäß gelöst durch

-hinter der Bedienungsplatte in parallelen Ebenen zu ihr angeordnete Hilfsplatten,

-eine federnde Randabstützung aller Platten untereinander, wobei die federnde Randabstützung von Platte zu Platte längs in gleicher Richtung zwischen parallel zu-und übereinander verlaufender Seitenrändern erfolgt und von Platte zu Platte immer abwechselnd um jeweils ca. 90° versetzt ist von den ersten zu den zweiten Seitenrändern und umgekehrt,

-mittig zwischen den federnden Randabstützungen im Bereich der Plattenränder angeordnete Kraftmeßfühler.

Bei einer derartigen Anordnung der Meßfühler gegenüber der Bedienugnsplatte bzw. den Hilfsplatten und federnden Abstützung der Platten untereinander werden auf die Kraftmeßfühler von jedem Punkt der Bedienungsplattenoberfläche aus derart verteilt Kräfte abgegeben, daß die Kraftmeßfühler die entsprechenden Signale zur Erzeugung einer x-y-Koordinatenadresse abgeben.

Nach einer weiteren Ausgestaltung der Erfindung ist vorgesehen, daß die einzelnen federnden Abstützungen aus einem Streb bestehen, der jeweils zwischen zwei übereinander befindlichen Seitenrändern verläuft und von dessen beiden Enden jeweils eines mit dem Rand der davor und eines mit dem Rand der dahinter befindlichen Platte gelenkig verbunden ist. Bei einer derartig federnden Abstützung der Bedienungsplatte bzw. der Hilfsplatten untereinander ergibt sich ein ausreichend steifer und flacher Aufbau, so daß die Vorrichtung nur unwesentlich viel Raum vor dem Bildschirm einer Bildröhre einnimmt.

Nach einer weiteren Ausgestaltung der Erfindung ist vorgesehen, daß die Hilfsplatten eine mittlere Ausnehmung aufweisen, die etwa dem Bildschirm einer dahinter angeordneten Bildröhre entspricht. Mit Hilfe der Ausnehmungen wird vermieden, daß auf den Hilfsplatten sich sammelnde Schmutzablagerungen zu Bildfehlern führen. Bei der Anbringung der Ausnehmungen befindet sich vor dem Bildschirm nur die Bedienungsplatte selbst. Die Hilfsplatten werden durch das Anbringen der Ausnehmungen zu einer Art Rahmen. Eine derartige Rahmengestaltung genügt aber völlig für die gewünschte Funktionsfähigkeit.

Die Erfindung wird anhand des in der Zeichnung dargestellten Ausführungsbeispieles näher erläutert. Es zeigen:

Fig. 1 eine Vorrichtung zur Erzeugung von x-y-Koordinatenadressen für einen hochauflösenden Bildschirm, die oberhalb des Bildschirmes einer Bildröhre angeordnet wird, in schaubildlicher Darstellung,

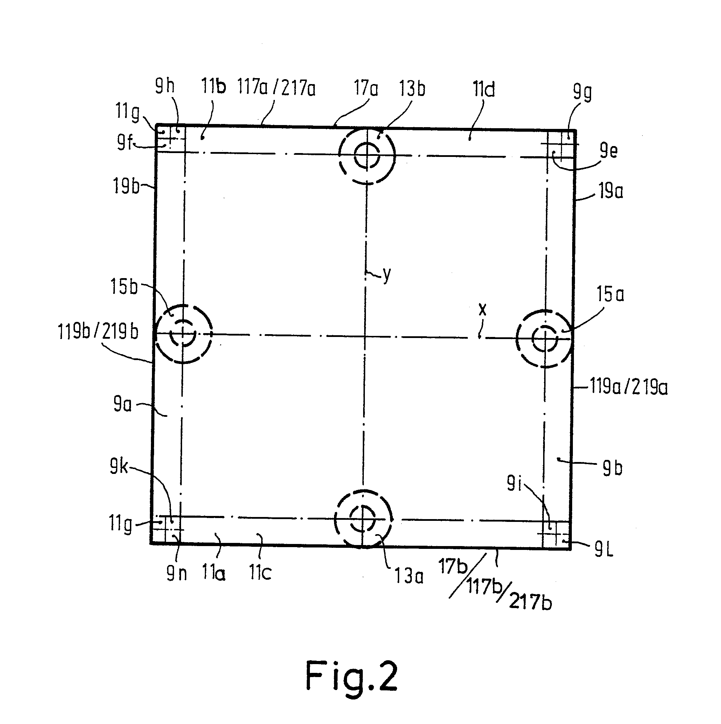

Fig. 2 die Vorrichtung in Draufsicht, wobei die Anordnung der Kraftmeßfühler und federnden Abstützungen durch die Platten hindurch projiziert dargestellt ist.

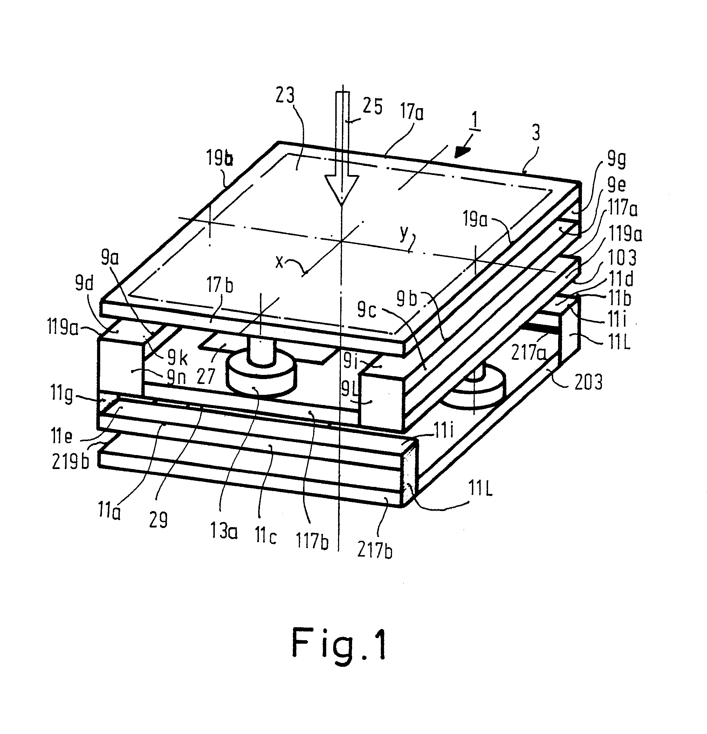

Die in Fig. 1 dargestellte Vorrichtung zur Erzeugung von x-y-Koordinatenadressen für einen hochauflösenden Bildschirm wird vor dem Bildschirm einer Bildröhre angeordnet. In der Fig. 1 sind die Abmessungen der Vorrichtung zur Verdeutlichung ihrer Funktionsweise verändert. Bei einem ausgeführten Beispiel ist die Vorrichtung nur wenige Millimeter flach; sie hat eine Ausdehnung in der Größenordnung eines Bildschirmes, vor dem sie angeordnet werden soll. Auch die Halterung, mit der die Vorrichtung vor dem Bildschirm angeordnet wird, ist in der Zeichnung der Einfachheit halber nicht dargestellt.

Die Vorrichtung 1 zur Erzeugung von x-y-Koordinatenadressen für einen hochauflösenden Bildschirm ist fest vor dem Bildschirm einer nicht dargestellten Bildröhre angeordnet. Die Vorrichtung 1 besteht aus drei Platten, und zwar aus einer vorn liegenden Bedienungsplatte 3 und zwei parallel zu der Bedienungsplatte 3 hinter dieser auf Abstand angeordneten Hilfsplatten 103 und 203. Die Platten 3, 103 und 203 sind untereinander mit Hilfe von federnden Randabstützungen 9a, 9b und 11a, 11b verbunden. Zwischen den Platten sind darüber hinaus Kraftmeßfühler 13a und 13b bzw. 15a und 15b vorgesehen.

Die Bedienungsplatte 3 ist in etwa rechteckig ausgebildet und hat parallel gegenüberliegende erste Seitenränder 17a und 17b sowie zweite, gegenüber den Seitenrändern 17a und 17b um etwa 90° versetzte, ebenfalls parallel gegenüberliegende Seitenränder 19a und 19b.

Die federnden Abstützungen 9a und 9b zwischen der Bedienungsplatte 3 und der Hilfsplatte 103 weisen jeweils einen Streb 9c bzw. 9d auf. Die Bedienungsplatte 3 und die Platte 103 haben einen solchen Abstand, daß die Streben 9c und 9d parallel zu den Seitenrändern 19a und 119a frei beweglich zwischen diesen verlaufen. Die Streben 9c und 9d sind mit ihren in Fig. 1 hinteren Enden 9e, 9f über flexible Stützen 9g und 9h mit der Bedienungsplatte 3 verbunden. Die vorderen Enden 9i und 9k sind über flexible Stützen 9l und 9n mit der Hilfsplatte 103 verbunden.

Eine entsprechende federnde Abstützung findet sich zwischen den Hilfsplatten 103 und 203. Die Streben 11c und 11d verlaufen um 90° versetzt gegenüber den Streben 9c und 9d. Das bedeutet, daß der Streb 11c zwischen den Seitenrändern 117b und 217b der Hilfsplatten 103 und 203 sowie parallel zu diesen Seitenrändern verläuft. Der Streb 11d verläuft dementsprechend parallel zu den Seitenrändern 117a und 217a sowie zwischen diesen. Die Streben 11c und 11d sind mit ihren, in der Zeichnung links gelegenen Enden 11e über elastische Verbindungen 11g mit der Hilfsplatte 103 verbunden, während die rechten Enden 11i über elastische Verbindungen 11L mit der dahinter liegenden Hilfsplatte 203 verbunden sind.

Mittig zwischen den federnden Randabstützungen 9a und 9b sind auf der Linie x im Bereich der Seitenränder 17a, 117a und 17b, 117b die Kraftmeßfühler 13a, 13b angeordnet. Zwischen den Hilfsplatten 103 und 203 sind die Kraftmeßfühler 15a und 15b zwischen den federnden Abstützungen 11a und 11b auf der Linie y angeordnet. Die Kraftmeßfühler 15a und 15b befinden sich dabei wieder im Bereich der Seitenränder 119a, 219a und 219a, 219b.

Wird mit Hilfe eines Fingers oder Stiftes an einem beliebigen Punkt gegen die Oberfläche 23 der Bedienungsplatte 3 gedrückt, was durch einen Pfeil 25 angedeutet ist, dann geben die x-y-Koordinaten des Druckpunktes verschieden verteilte Druckwerte auf die Kraftmeßfühler 13a, 13b, 15a, 15b ab, die in elektrische Signale umgewandelt werden, die einer x-y-Koordinatenadresse entspricht, die genau mit dem geografischen Ort des Druckpunktes auf dem hochauflösenden Bildschirm identisch ist.

In der Mitte der Hilfsplatten 103, 203 sind Ausnehmungen 27, 29 vorgesehen, die den Bildschirm über der nicht dargestellten Bildröhre freigeben.

## Ansprüche

1. Mechanische Vorrichtung zur Erzeugung von x-y-Koordinatenadressen für einen hochauflösenden Bildschirm mit einer druckempfindlichen, Kraftmeßfühler beeinflussenden transparenten Bedienungsplatte, mit der durch Drücken auf die Bedienungsplattenoberfläche im Druckpunkt durch die Kraftmeßfühler elektrische Signale erzeugt werden, die in einer nachfolgenden Elektronik in digitale x-y-Koordinatenadressen umgewandelt werden, die genau dem geografischen Ort des Druckpunktes auf dem Bildschirm entsprechen, wobei die Bedienungsplatte erste, etwa parallel gegenüberliegende Seitenränder und zweite, diesen gegenüber, etwa um 90° versetzte, ebenfalls etwa parallel gegenüberliegende Seitenränder aufweist und wobei die Bedienungsplatte in federnden Randabstützungen angeordnet ist, <u>gekennzeichnet durch</u>

-hinter der Bedienungsplatte (3) in parallelen Ebenen zu ihr angeordnete Hilfsplatten (103, 203),

-eine federnde Randabstützung (9a, 9b bzw. 11a, 11b) aller Platten (3, 103, 203) untereinander, wobei die federnde Randabstützung (9a, 9b bzw. 11a, 11b) von Platte zu Platte längs in gleicher Richtung zwischen parallel zu-und übereinander verlaufender Seitenränder (17a/b, 19a/b, 117a/b, 119a/b, 217a/b, 219a/b) erfolgt und von Platte zu Platte immer abwechselnd um jeweils ca. 90° versetzt ist von den ersten zu den zweiten Seitenrändern und umgekehrt,

—mittig zwischen den federnden Randabstützungen im Bereich der Plattenränder angeordnete Kraftmeßfühler (13a, 13b, 15a, 15b).

2. Mechanische Vorrichtung nach Anspruch 1, dadurch gekennzeichnet, daß die einzelnen federnden Abstützungen (9a, 9b, 11a, 11b) aus einem Streb (9c, 9d, 11c, 11d) bestehen, der jeweils zwischen zwei übereinander befindlichen Seitenrändern verläuft und von dessen beiden Enden jeweils einer mit dem Rand der davor und einer mit dem Rand der dahinter befindlichen Platte gelenkig verbunden ist.

3. Mechanische Vorrichtung nach den Ansprüchen 1 und 2, dadurch gekennzeichnet, daß die Hilfsplatten (103, 203) eine mittlere Ausnehmung (27, 29) aufweisen, die etwa dem Bildschirm einer dahinter angeordneten Bildröhre entspricht.

Fig.1

Fig.2